Europäisches Patentamt

European Patent Office

Office européen des brevets

(11) Numéro de publication: **0 230 690**
**A2**

## (12) DEMANDE DE BREVET EUROPEEN

(21) Numéro de dépôt: 86202181.3

(22) Date de dépôt: 01.12.86

(51) Int. Cl.⁴: **B60R 25/00**

(30) Priorité: 10.12.85 FR 8516315
27.05.86 FR 8607688

(43) Date de publication de la demande:
05.08.87 Bulletin 87/32

(84) Etats contractants désignés:
**BE DE ES FR GB IT NL SE**

(71) Demandeur: **Tschudin, Richard**
**Lourde**
**F-31510 Barbezan(FR)**

(72) Inventeur: **Tschudin, Richard**
**Lourde**
**F-31510 Barbezan(FR)**

(74) Mandataire: **Barre, Philippe**
**Cabinet Barre-Gatti-Laforgue 95 rue des**
**Amidonniers**
**F-31069 Toulouse Cédex(FR)**

(54) **Dispositif antivol destiné à interdire l'usage des commandes à pied d'un véhicule.**

(57) L'invention concerne un dispositif antivol, comprenant deux mâchoires (1, 2) mobiles entre une position fermée où elles interdisent l'usage des commandes à pied, et une position ouverte où elles sont escamotées vers le plancher, des moyens de verrouillage (8, 10, 11) de ces mâchoires en position fermée et un système de sécurité permettant de les maintenir en position ouverte. Ce système de sécurité comprend un cliquet (12) articulé autour d'un axe de rotation solidaire d'une mâchoire (1), et pourvu d'un talon d'encliquetage (12a) adapté pour s'insérer dans un logement (15) ménagé dans la mâchoire opposée (2). En position ouverte des mâchoires (1, 2), le talon d'encliquetage (12a) est maintenu dans le logement (15) par une lame flexible (16) possédant une extrémité libre logée en permanence à l'intérieur d'une fenêtre de guidage - (18) solidaire du cliquet (12).

Fig. 1

# DISPOSITIF ANTIVOL DESTINE A INTERDIRE L'USAGE DES COMMANDES A PIED D'UN VEHICULE

L'invention concerne un dispositif antivol destiné à permettre la neutralisation des commandes à pied d'un véhicule.

Plusieurs types de dispositifs antivols ont été mis au point visant à interdire l'usage des commandes à pied d'un véhicule. Toutefois, la majorité de ces dispositifs tels que décrits dans les brevets US 1 448 945, US 1 566 885 et US 1 395 966 présentent de nombreux inconvénients. En premier lieu, la mise en place de ces dispositifs nécessite de percer une ouverture dans le plancher du véhicule pour le débattement du levier de commande des organes de blocage des pédales. Cette ouverture peut être la source de désagréments tels que remontées d'eau... De plus, tous ces dispositifs sont relativement encombrants (présence du levier de commande...) et sont dotés de mécanismes d'entraînement relativement complexes qui en obèrent le coût. En dernier lieu, ils ne peuvent être installés sur des véhicules de types différents sans subir de nombreuses modifications.

Un autre type de dispositif antivol, tel que décrit dans le brevet GB 2 119 333, permet de pallier certains de ces inconvénients. Ce dispositif est doté d'une plaque positionnée sous les pédales du véhicule et mobile entre une position relevée où elle neutralise ces pédales et une position rabattue vers le plancher où elle permet leur actionnement, d'un mécanisme d'entraînement de cette plaque entre les deux positions précitées et d'un système de verrouillage adapté pour bloquer ce mécanisme dans l'une ou l'autre position de la plaque. Le montage de ce dispositif ne nécessite donc, au niveau du plancher, que quelques vis de fixtion. De plus, la hauteur de la plaque peut être déterminée de façon à permettre le montage de ce dispositif antivol sur des véhicules de types différents. Par contre, de par sa conception, ce dispositif antivol oblige à fixer le mécanisme d'entraînement sous le tableau de bord du véhicule, c'est-à-dire dans un endroit exigu et peu accessible et sur un élément du véhicule peut adapté pour offrir la rigidité nécessaire à une fixation efficace. Les organes de fixation de ce mécanisme d'entraînement doivent, en outre, être déterminés pour chaque modèle de véhicule.

Un autre modèle de dispositif antivol, tel que décrit dans le brevet US 1 554 388 permet de solutionner ce dernier problème. En effet, ce dispositif est doté de deux mâchoires mobiles entre une position fermée où elles neutralisent les commandes à pied et une position ouverte où elles s'étendent sur le plancher du véhicule, et de moyens de verrouillage de ces mâchoires en position fermée. Le montage de ce dispositif antivol ne requiert donc que quelques vis de fixation permettant d'assujettir chaque mâchoire sur le plancher. Toutefois, mis à part le fait que ce dispositif antivol n'est pas conçu pour être monté sur les véhicules actuels, ce dernier présente un inconvénient fondamental. En effet, aucun organe n'est prévu pour empêcher une fermeture accidentelle de la mâchoire s'étendant sur la partie inclinée du plancher. Or une fermeture, même partielle, de cette mâchoire entraîne la neutralisation des pédales. Pour des raisons de sécurité, il n'est donc pas envisageable d'accepter une telle éventualité.

La présente invention se rapporte à un dispositif antivol conçu d'après le principe du modèle précité, mais adapté pour pallier les inconvénients de ce dernier.

A cet effet, l'objectif principal de la présente invention est de fournir un dispositif antivol présentant toutes les conditions de sécurité vis-à-vis de fermetures accidentelles, partielles ou totales, des mâchoires, lors de l'utilisation du véhicule.

Un autre objectif de l'invention est de faciliter l'ouverture de la serrure de verrouillage des mâchoires et les manoeuvres d'ouverture et de fermeture de ces mâchoires.

Un autre objectif est d'obtenir une parfaite neutralisation des commandes à pied.

Un autre objectif est de garantir de très bonnes conditions de sécurité contre le vol.

Ce dispositif antivol destiné à interdire l'usage des commandes à pied comprend :
-deux mâchoires fixées sur le plancher du véhicule par l'intermédiaire de moyens de fixation adaptés pour permettre leur mobilité entre une position fermée où elles interdisent l'usage des commandes à pied et une position ouverte où elles sont escamotées vers le plancher,
-des moyens de verrouillage comportant une serrure apte à verrouiller les mâchoires dans leur position formée.

Selon la présente invention, ce dispositif antivol se caractérise en ce qu'il comprend un système de sécurité apte à maintenir les mâchoires en position ouverte.

Selon un mode de réalisation préférentiel, ce système de sécurité comprend des moyens de blocage comportant :
-un cliquet, articulé autour d'un axe de rotation solidaire d'une des mâchoires, et pourvu d'un talon d'encliquetage,
-au moins un logement, ménagé dans la mâchoire opposée, et de forme adaptée pour loger le talon d'encliquetage du cliquet,

-des moyens élastiques adaptés pour solliciter le talon d'encliquetage du cliquet, lors de. l'ouverture des mâchoires, et le maintenir à l'intérieur du logement précité, en position ouverte des mâchoires.

Ainsi, lors de l'ouverture des mâchoires, le cliquet pivote autour de son axe, jusqu'à ce que le talon d'encliquetage se trouve positionné dans le logement ménagé à cet effet dans la mâchoire opposée.

En position ouverte des mâchoires, les moyens élastiques sollicitant le talon d'encliquetage du cliquet garantissent contre tout mouvement de ce talon d'encliquetage, tendant à le faire sortir de son logement. La seule manoeuvre permettant de retirer le talon d'encliquetage de son logement, est effectuée manuellement afin de permettre la fermeture des mâchoires.

Selon une autre caractéristique de l'invention, les moyens élastiques comprennent une lame flexible, solidaire de la mâchoire opposée à la mâchoire portant le cliquet, et possédant une extrémité libre logée en permanence à l'intérieur d'une fenêtre de guidage solidaire du cliquet. En outre, la lame flexible et la fenêtre sont agencées de façon que la portion libre de la lame coulisse à l'intérieur de la fenêtre, longitudinalement relativement au cliquet, lors de l'ouverture des mâchoires.

Ainsi, les moyens élastiques possèdent une fonction auxiliaire de guidage du cliquet, qui garantit le positionnement du talon d'encliquetage à l'intérieur de son logement.

De plus, en position ouverte des mâchoires, la portion libre de la lame flexible exerce une pression sur le cliquet qui tend à s'opposer à tout déplacement de son extrémité libre.

Par ailleurs, le dispositif antivol est avantageusement doté d'une enveloppe de protection agencée pour protéger les moyens de verrouillage, en position fermée des mâchoires. Cette enveloppe de protection présente la forme d'un U, doté d'une traverse portant la serrure, et de deux montants, ces trois éléments étant d'une largeur sensiblement égale à la· distance séparant les mâchoires, en position fermée. Cette enveloppe est fixée sur l'une des mâchoires de façon que sa traverse se profile approximativement avec le bord supérieur de cette mâchoire.

Outre son rôle de protection de la serrure, cette enveloppe constitue un élément supplémentaire garantissant contre toute fermeture accidentelle des mâchoires. En effet, le cliquet est préférentiellement monté articulé autour d'un axe de rotation dont les extrémités sont portées par les montants de l'enveloppe de protection, sensiblement orthogonalement à ces montants. Il est donc impossible à l'usager du véhicule d'heurter et éventuellement de détériorer le système d'accrochage du cliquet.

Le dispositif antivol est, également, avantageusement doté de deux montants fixés sur la mâchoire opposée à l'enveloppe de protection et disposés de façon que cette enveloppe de protection s'insère dans l'espace séparant lesdits montants lors de la fermeture des mâchoires. Le but de ces deux montants est d'éviter à l'usager de venir heurter accidentellement avec le pied, le talon d'encliquetage du cliquet et la lame flexible, en position ouverte des mâchoires.

Ainsi, le dispositif antivol selon l'invention est doté d'organes de sécurité, garantissant contre toute fermeture accidentelle des mâchoires, et dont la mise en place se fait automatiquement lors de l'ouverture des mâchoires ; de plus ces organes de sécurité sont protégés contre tout choc accidentel risquant de les détériorer et de neutraliser leur action. Cette neutralisation ne peut, en fait, être obtenue que manuellement et volontairement en vue de la fermeture des mâchoires.

La structure de ce dispositif antivol décrite ci-dessus dans sa forme générale sera mieux comprise à la lecture de la description qui suit et à l'examen des dessins annexés qui en représentent à titre d'exemple non limitatif, un mode de réalisation préférentiel. Sur ces dessins qui font partie intégrante de la présente description :

-la figure 1 est une vue en perspective d'un dispositif antivol, conforme à l'invention, en position ouverte, avec une partie arrachée,

-la figure 2 en est une vue en perspective en position fermée,

-la figure 3 en est une coupe verticale par un plan AA, en position fermée,

-les figures 4 et 5 sont des schémas illustrant les deux positions de fonctionnement de ce dispositif antivol.

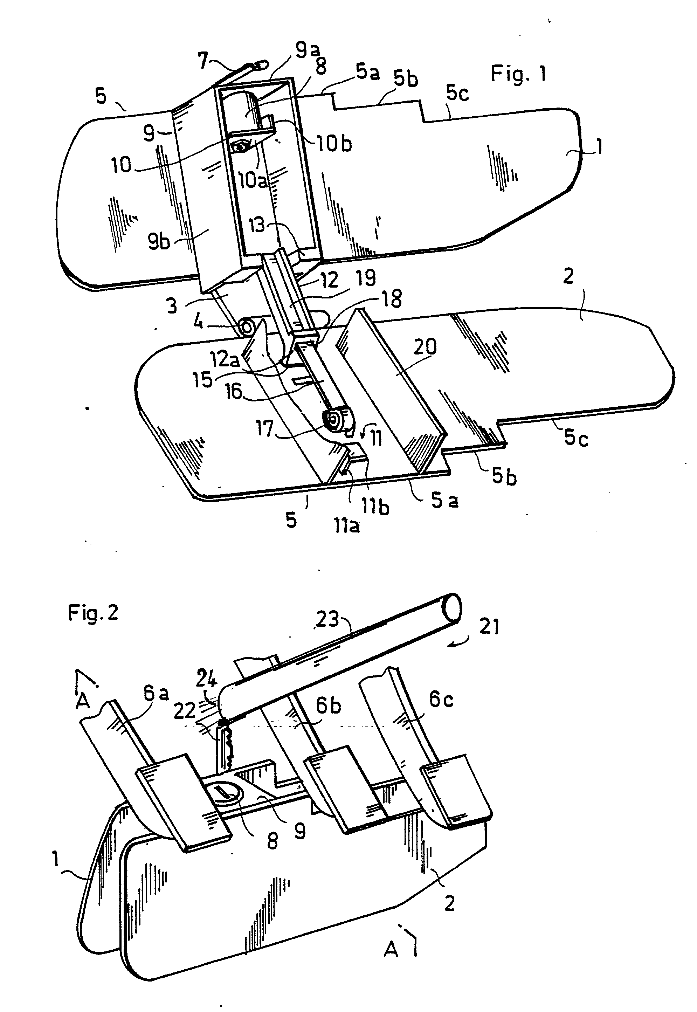

Le dispositif antivol représenté à titre d'exemple aux figures 1 à 3 comprend deux mâchoires 1, 2, reliées au niveau de leur bord inférieur par une plaque de fixation 3 formant l'élément fixe d'une double charnière sur lequel ces mâchoires sont articulées au moyen de broches 4.

La plaque de fixation 3 est fixée sur le plancher du véhicule par tout moyen de fixation connu en soi, tandis que les broches d'articulation 4 des mâchoires 1, 2 peuvent être constituées de rivets mâtés garantissant contre tout démontage du dispositif antivol.

Les bords supérieurs 5 respectifs de chaque mâchoire sont, quant à eux, découpés de façon à présenter des paliers 5a, 5b, 5c successifs dont la hauteur, par rapport au plancher, en position fermée des. mâchoires, est fonction de la disposition et de la hauteur des différentes pédales du véhicule. Cette caractéristique permet d'obtenir un blocage parfait, avec très peu de jeu, des différentes pédales 6a, 6b, 6c et par conséquent une parfaite neutralisation de celles-ci. ..

Sur le bord supérieur 5 d'une des mâchoires 1 est en outre fixé un crochet 7 adapté pour coopérer avec le bord supérieur 5 de la deuxième mâchoire 2, de façon à maintenir ces deux mâchoires en position fermée. Ainsi, lors de la fermeture du dispositif antivol, il n'est pas nécessaire d'avoir à maintenir manuellement les mâchoires 1, 2 en position fermée jusqu'au moment du verrouillage de ce dispositif. Le crochet 7 assure cette fonction.

Le verrouillage de ce dispositif antivol est réalisé au moyen d'une serrure 8 montée sur une enveloppe de protection 9, fixée sur l'une des mâchoires 1. Cette enveloppe de protection 9 présente la forme d'un U doté d'une traverse 9a portant la serrure 8, et de deux montants 9b, ces trois éléments étant d'une largeur sensiblement égale à la distance séparant les mâchoires, en position fermée de celles-ci.

L'enveloppe de protection 9 est fixée sur la mâchoire 1 de façon que la traverse 9a se profile avec le bord supérieur 5a de celle-ci. Ainsi, en position fermée des mâchoires, la serrure 8 est totalement enfermée dans un volume délimité par l'enveloppe de protection 9 et les deux mâchoires 1 et 2.

En outre, les deux montants 9b de l'enveloppe de protection 9 possèdent une longueur supérieure à la hauteur des mâchoires 1, 2 de façon à se prolonger au-delà du bord inférieur de ces mâchoires. Ainsi ces deux montants 9b s'étendent sensiblement entre le bord supérieur 5 des mâchoires et le plancher du véhicule, rendant impossible tout accès à la serrure 8 à partir de la partie inférieure du volume la renfermant.

La serrure 8 portée par la traverse 9a de l'enveloppe de protection est une serrure de type "Securit". Elle est dotée à l'extrémité du barillet d'un pêne 10 présentant la forme générale d'un L. Ce dernier est fixé dans le prolongement du barillet par l'intermédiaire de l'extrémité d'une de ses ailes 10a, de façon que cette aile s'étende dans un plan orthogonal à l'axe de rotation du barillet.

Lors de la fermeture de la serrure 8, la deuxième aile 10b du pêne est entraîné en rotation autour de l'axe du barillet et s'engage dans une gâche 11 fixée sur la mâchoire 2. Cette gâche présente également la forme d'un L et se trouve fixée sur la mâchoire 2 par l'intermédiaire de l'extrémité de l'une de ses ailes 11a.

Ainsi, les deux mâchoires étant en position fermée, lors de l'actionnement de la serrure 8, l'aile 10b du pêne vient buter lors de sa rotation contre l'aile 11a de la gâche. L'ouverture du dispositif antivol est ensuite interdite grâce à la coopération des ailes 11b de la gâche 11 et 10b du pêne 10 qui empêchent tout déplacement des mâchoires 1, 2 tendant à permettre l'ouverture de ce dispositif.

Outre les moyens de verrouillage du dispositif antivol, l'enveloppe de protection 9 porte également un cliquet 12 doté d'un talon d'encliquetage 12a permettant de bloquer le dispositif en position ouverte. A cet effet, l'extrémité inférieure de chaque montant 9b est prolongée par un retour 13, orienté vers le montant 9b situé en vis-à-vis. Chaque retour 13 est porteur de l'extrémité d'un axe de rotation 14 autour duquel est articulée une extrémité du cliquet 12. La présence de ces retours 13 a pour but principal de raccourcir la longueur de l'axe de rotation 14 et, par là-même, de diminuer les risques de flambement de cet axe.

Le cliquet 12 peut donc être entraîné en rotation autour d'un axe de rotation 14 orthogonal à la direction de déplacement des mâchoires 1, 2. Lors de cette rotation le cliquet est guidé par des moyens élastiques (16, 17) adaptés pour guider le talon d'encliquetage 12a de ce cliquet vers un logement 15 ménagé dans la mâchoire 2.

Il est à noter qu'il est possible de prévoir plusieurs logements 15 en vue de s'adapter aux caractéristiques des planchers de plusieurs véhicules différents.

Ces moyens élastiques (16, 17) comprennent une lame flexible 16 possédant une extrémité libre 16a et dont l'autre extrémité 17 forme un ressort en spirale possédant une extrémité immobilisée par un axe fixé sur la mâchoire 2.

L'extrémité libre 16a de cette lame flexible 16 coulisse à l'intérieur d'une fenêtre de guidage 18 ménagée au niveau du talon d'encliquetage du cliquet 12 et positionnée dans le prolongement d'une gorge 19 pratiquée sur la face supérieure de ce cliquet. De plus, la longueur de la lame flexible 16 et l'agencement de cette lame 16 et de la fenêtre de guidage 18 sont adaptés pour qu'une portion libre de la lame se trouve logée en permanence à l'intérieur de la fenêtre 18, notamment en position ouverte des mâchoires 1, 2.

Ainsi, lors de l'ouverture du dispositif antivol, la lame 16 coulisse à l'intérieur de la fenêtre de guidage 18, longitudinalement relativement au cliquet 12, et permet donc de guider ce cliquet de façon à obtenir, automatiquement, un positionnement du talon d'encliquetage 12a à l'intérieur du logement 15, en position ouverte des mâchoires.

Dans cette position ouverte, la portion libre de la lame flexible 16, insérée à l'intérieur de la fenêtre de guidage 18, exerce une pression sur le cliquet 12 tendant à empêcher tout déplacement de celui-ci hors du logement 15.

Lors de l'opération inverse, de fermeture des mâchoires, le conducteur a seulement besoin de se saisir du talon d'encliquetage 12a, de le retirer du logement 15 puis de refermer les mâchoires 1,2 jusqu'à leur position fermée où elles sont reliées par le crochet 7.

Pour protéger le cliquet 12 et la lame flexible 16 contre tout choc accidentel, la mâchoire 2 est également dotée de part et d'autre de la lame 16 de deux montants 20 espacés d'une distance adaptée pour permettre à l'enveloppe de protection 9 de s'insérer entre ces deux montants 20, lors de la fermeture du dispositif.

Ces deux montants 20 ont une double fonction : ils servent principalement, à éviter que le conducteur vienne détériorer les moyens de blocage 12, 16, lors de la conduite du véhicule. Ils assurent également une double protection latérale de la serrure 8, en position fermée des mâchoires 1, 2.

En dernier lieu, en vue de faciliter l'ouverture ou la fermeture de la serrure 8, ce dispositif antivol peut être associé à un système de clef 21. Ce système de clef 21 possède en l'exemple une extrémité 22 articulée vers l'extrémité d'une tige 23 creuse, du type lampe-stylo, c'est-à-dire renfermant des moyens d'éclairage 24.

La lampe-stylo permet l'éclairage du dispositif antivol, tandis que l'articulation de la clef 22 facilite les manoeuvres d'introduction et de rotation de cette clef à l'intérieur de la serrure 8, dans cette partie très exiguë du cockpit.

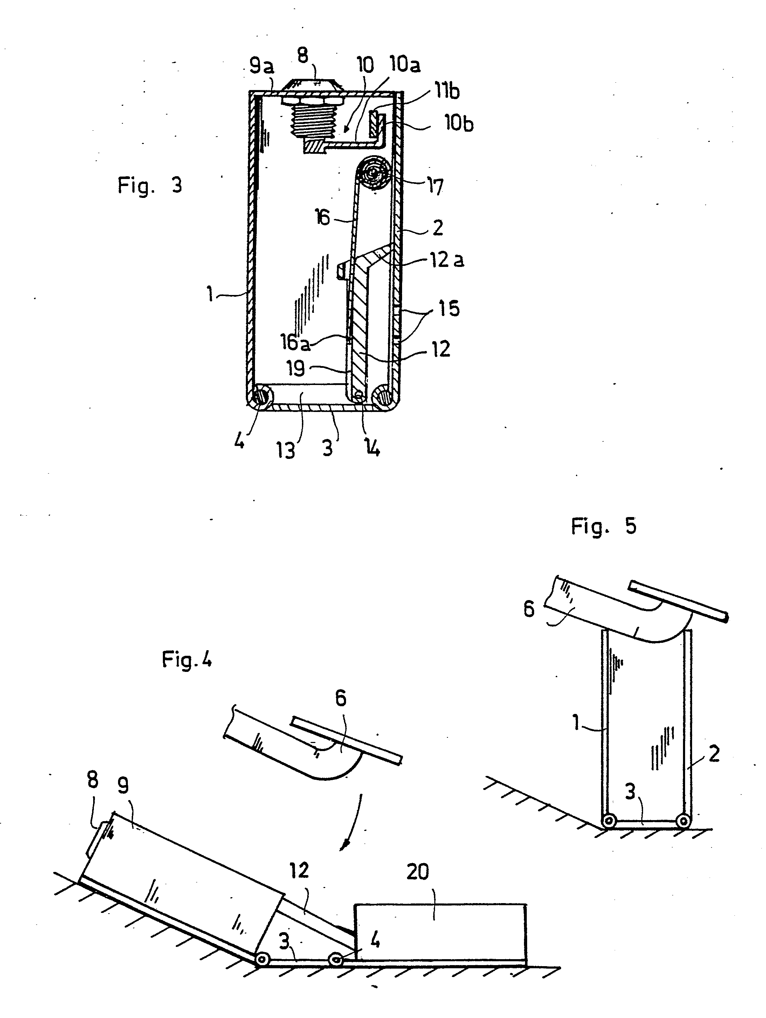

Les figures 4 et 5 illustrent les deux positions de fonctionnement du dispositif antivol. Une position ouverte (figure 4) où les deux mâchoires 1, 2 s'étendent sur le plancher du véhicule, autorisant le déplacement des pédales 6. Une position fermée - (figure 5) où tout actionnement des pédales 6 est impossible.

Il est à noter, qu'en position ouverte, du fait du positionnement des moyens de blocage 12, 16 à l'intérieur de l'espace délimité, d'une part, par les montants 20 et, d'autre part, l'enveloppe de protection 9, ce dispositif antivol n'est la cause d'aucune gêne pour le conducteur. En effet, les moyens de blocage sont disposés dans un espace compris entre la pédale d'embrayage et les pédales de frein et d'accélérateur, c'est-à-dire entre le pied gauche et le pied droit du conducteur, et ne gênent donc en rien l'actionnement des différentes commandes à pied.

**Revendications**

1/- Dispositif antivol destiné à interdire l'usage des commandes à pied d'un véhicule, et comprenant :
-deux mâchoires (1, 2) fixées sur le plancher du véhicule par l'intermédiaire de moyens de fixation - (3, 4) adaptés pour permettre leur mobilité entre une position fermée où elles interdisent l'usage des commandes à pied (6), et une position ouverte où elles sont escamotées vers le plancher,
-des moyens de verrouillage (8, 10, 11) comportant une serrure (8) apte à verrouiller les mâchoires (1, 2) dans leur position fermée,
ledit dispositif étant caractérisé en ce qu'il comprend un système de sécurité (12, 14-19) apte à maintenir les mâchoires (1, 2) en position ouverte.

2/ -Dispositif antivol selon la revendication 1, caractérisé en ce que le système de sécurité comprend des moyens de blocage (12, 14-19) comportant :
-un cliquet (12), articulé autour d'un axe de rotation (14) solidaire d'une mâchoire (1), et pourvu d'un talon d'encliquetage (12a),
-au moins un logement (15), ménagé dans la mâchoire (2) opposée, et de forme adaptée pour loger le talon d'encliquetage (12a) du cliquet (12),
-des moyens élastiques (16, 17) adaptés pour solliciter le talon d'encliquetage (12a) du cliquet lors de l'ouverture des mâchoires (1, 2) et le maintenir à l'intérieur du logement (15) précité, en position ouverte des mâchoires.

3/ -Dispositif antivol selon la revendication 2, caractérisé en ce que les moyens élastiques (16, 17) comprennent une lame flexible (16) solidaire de la mâchoire (2) opposée à la mâchoire (1) portant le cliquet (12), et possédant une extrémité libre - (16a) logée en permanence à l'intérieur d'une fenêtre de guidage (18) solidaire du cliquet (12), lesdites lame (16) et fenêtre (18) étant agencées de façon que la portion libre (16a) de la lame (16) coulisse à l'intérieur de la fenêtre (18), longitudinalement relativement au cliquet (12), lors de l'ouverture des mâchoires (1, 2), en vue d'assurer une fonction auxiliaire de guidage du talon d'encliquetage (12a) vers le logement (15).

4/ -Dispositif antivol selon la revendication 3, caractérisé en ce que l'extrémité (17) de la lame - (16) opposée à l'extrémité libre (16a) forme un ressort en spirale possédant une extrémité immobilisée par un axe fixé sur la mâchoire (2).

5/ -Dispositif antivol selon l'une des revendications précédentes, caractérisé en ce qu'il comprend une enveloppe de protection (9) agencée pour protéger les moyens de verrouillage (8, 10, 11) dans la position fermée des mâchoires (1, 2).

6/ -Dispositif antivol selon la revendication 5, caractérisé en ce que l'enveloppe de protection - (9) présente la forme d'un U, doté d'une traverse - (9a), portant la serrure (8), et de deux montants - (9b), lesdits traverse (9a) et montants (9b) étant de largeur sensiblement égale à la distance séparant les mâchoires (1, 2) en position fermée, et étant fixés sur l'une des mâchoires (1) de façon que la traverse (9a) se profile approximativement avec le bord supérieur (5) de ladite mâchoire.

7/ -Dispositif antivol selon la revendication 6, caractérisé en ce que les montants (9b) possèdent une longueur supérieure à la hauteur des mâchoires (1, 2) de façon à s'étendre sensiblement entre le bord supérieur (5) desdites mâchoires et le plancher du véhicule, en position fermée des mâchoires.

8/ -Dispositif antivol selon l'une des revendications 6 ou 7, caractérisé en ce que le cliquet (12) est monté articulé autour d'un axe de rotation (14) dont les extrémités sont fixées sur les montants - (9b) de l'enveloppe de protection (9), sensiblement orthogonalement auxdits montants.

9/ -Dispositif antivol selon l'une des revendications 6, 7 ou 8, caractérisé en ce que la serrure (8) comporte un barillet porteur d'un pêne (10) fixé dans le prolongement dudit barillet et doté d'une extrémité (10b) apte à être entraînée en rotation autour de l'axe de rotation du barillet, de façon à coopérer avec une gâche (11) solidaire de la mâchoire (2) opposée à l'enveloppe de protection - (9).

10/ -Dispositif antivol selon l'une des revendications 6 à 9, caractérisé en ce qu'il comprend deux montants (20) fixés sur la mâchoire (2) opposée à l'enveloppe de protection (9) et disposés de façon que ladite enveloppe de protection (9) s'insère dans l'espace séparant lesdits montants lors de la fermeture des mâchoires (1, 2).

11/ -Dispositif antivol selon l'une des revendications précédentes, caractérisé en ce que les moyens de fixation (3, 4) des mâchoires (1, 2) sur le plancher du véhicule comprennent une plaque de fixation (3) apte à être fixée sur le plancher, et formant l'élément fixe d'une double charnière sur lequel les mâchoires sont articulées au moyen de broches (4).

12/ -Dispositif antivol selon la revendication 11, caractérisé en ce que les broches (4) d'articulation des mâchoires (1, 2) sont constituées par des rivets matés.

13/ -Dispositif antivol selon l'une des revendications précédentes, caractérisé en ce qu'il comprend un crochet (7) fixé vers le bord supérieur (5) de l'une des mâchoires (1) et adapté pour coopérer avec l'autre mâchoire (2) en vue d'accrocher lesdites mâchoires en position fermée.

14/ -Dispositif antivol selon l'une des revendications précédentes, caractérisé en ce que le bord supérieur (5) des mâchoires (1, 2) est découpé de façon à présenter des paliers (5a, 5b, 5c) successifs de hauteur par rapport au plancher, en position fermée des mâchoires (1, 2) conjuguée de la hauteur des différentes commandes à pied (6a, 6b, 6c) au-dessus du plancher.

15/ -Système de clef (21) adapté pour manoeuvrer la serrure (8) d'un dispositif antivol conforme à l'une des revendications précédentes, caractérisé en ce qu'il comporte une clef (22) articulée vers l'extrémité d'une tige (23).

16/ -Système de clef selon la revendication 15, caractérisé en ce que la tige (23) est une tige creuse à l'intérieur de laquelle sont intégrés des moyens d'éclairage (24).

Fig. 1

Fig. 2

Fig. 3

Fig. 5

Fig. 4